# EUROPEAN PATENT APPLICATION

(11) **EP 4 230 549 A1**
(43) Date of publication of application: **23.08.2023**
(21) Application number: 22157117.7
(22) Date of filing: 16.02.2022
(51) Int. Cl.: B65G 1/04

(54) **WAREHOUSE SYSTEM FOR THREE-DIMENSIONAL ARRANGEMENT OF STORAGE BINS**

(71) Applicant: VOLUME Lagersysteme GmbH, 01097 Dresden (DE)
(72) Inventor: Voloskov, Mikhail, 64500 Saint Jean de Luz (FR); Preußer, Martin, 01445 Radebeul (DE)
(74) Representative: Laqua, Bernd Christian Kurt

(57) **Abstract**

The present disclosure relates to a warehouse system (300) providing space for a three-dimensional arrangement of storage bins. The warehouse system (300) comprises a plurality of interconnected storage modules (200), wherein each storage module (200) comprises a storage area and a top level arranged above the storage area, wherein the storage area is adapted to accommodate a plurality of stacks of storage bins arranged in a horizontal two-dimensional grid at a bottom of the storage module (200), wherein, at the top level, at least one vehicle is movable in alignment with the two-dimensional grid to retrieve and place storage bins from and to the plurality of stacks, wherein the plurality of interconnected storage modules (200) comprises at least two levels of storage modules (200) placed one above the other in an individual room.

## Description

### Technical Field

The present disclosure generally relates to the field of warehouse systems. More particularly, the present disclosure relates to a warehouse system providing space for a three-dimensional arrangement of storage bins, a modular construction method for assembling a warehouse system, a prefabricated interconnectable storage module for use in assembling a warehouse system as well as a vehicle for retrieving a storage bin from a warehouse system.

### Background

In the industry, warehouses are used to store large amounts of goods in an organized manner. Warehouse systems typically employed nowadays encompass a variety of types of storage systems ranging from simple pallet racks, allowing the storage of palletized goods in horizontal rows with multiple levels where stacker cranes are employed to retrieve goods from the racks, to compact warehouse systems that rather focus on the efficient use of available space in a warehouse.

Automated warehouse systems, such as the one disclosed in WO 2014/075937 A1, are one example of compact warehouse systems. As shown in Figure 1, such warehouse systems may comprise a grid structure 100 of storage cells, wherein each storage cell is arranged to accommodate a vertical stack of storage bins 102. At a top level of the grid structure, one or more robots 104 (or, more generally, "vehicles") may move horizontally to receive and place storage bins 102 from and to the stacks of the storage cells, i.e., by raising storage bins 102 from the stacks to the top level or lowering storage bins 102 from the top level down onto the stacks, respectively. A bin lift 106 integrated into the grid structure 100 may receive a storage bin 102 from a robot 104 at the top level and convey the storage bin 102 in a vertical direction down to a handover station 108. Such warehouse systems are offered by AutoStore (http://www.autostoresystem.com), for example.

While such systems may efficiently use the available space of a warehouse, they may suffer from the problem that, when a storage bin is to be retrieved that is currently stored at a low position in a stack of a storage cell (e.g., at the bottom of a stack), all storage bins placed above the bin in the same stack temporarily need to be relocated, e.g., to other stacks of the grid structure. This may require an iterative relocation process until all storage bins above the bin to be retrieved are relocated so that the bin can finally be accessed/retrieved and conveyed via the top level to the handover station. It will be understood that such relocation process may be time-consuming and quick retrieval times for all bins of the warehouse system therefore cannot be guaranteed. Promises desired to be made by warehouse system providers, especially for the quick commerce industry, such as promises for retrieval of bins within few seconds in order to guarantee instant delivery upon a completed purchase transaction, can hardly be made.

### Summary

It is thus an object of the present disclosure to provide warehouse system techniques that enable quicker retrieval of the storage bins of a warehouse system, or that improve other aspects of the above-described warehouse system.

According to a first aspect, a warehouse system providing space for a three-dimensional arrangement of storage bins is provided. The warehouse system comprises a plurality of interconnected storage modules, wherein each storage module comprises a storage area and a top level arranged above the storage area, wherein the storage area is adapted to accommodate a plurality of stacks of storage bins arranged in a horizontal two-dimensional grid at a bottom of the storage module, wherein, at the top level, at least one vehicle is movable in alignment with the two-dimensional grid to retrieve and place storage bins from and to the plurality of stacks. The plurality of interconnected storage modules comprises at least two levels of storage modules placed one above the other in an individual room.

For each of the plurality of storage modules, a height of the storage module may be dimensioned to allow a maximum number of 6, preferably 5, 4 or 3, storage bins per stack of the plurality of stacks of the storage module. The plurality of storage modules may comprise at least 3, preferably at least 4 or at least 5, levels of storage modules placed one above the other in the individual room. The plurality of interconnected storage modules may further comprise at least two storage modules placed one next to the other in a horizontal direction in the individual room.

Each of the plurality of storage modules may be a prefabricated interconnectable storage module, wherein the warehouse system may be assembled from the plurality of storage modules in the manner of a modular construction system. Among the plurality of interconnected storage modules, two storage modules placed one above the other may be interconnected using a mechanical form fit established between a bottom of the upper storage module and a top of the lower storage module of the two storage modules. Each of the plurality of storage modules may be dimensioned to have a maximum extension in a longitudinal direction of 4, preferably 3 or 2, meters. Each of the plurality of storage modules may be dimensioned to accommodate a maximum of 500, preferably 400, 300, 200 or 100, storage bins in the plurality of stacks of the storage module.

Each of the plurality of storage modules may comprise an own ground surface, optionally in the form of a rod assembly aligning with the two-dimensional grid, based on which the plurality of stacks of storage bins of the storage module may be placeable. At least a portion of the plurality of interconnected storage modules may be provided with outer walls so as to form a zone of contiguous storage areas that is closed from the exterior, wherein, optionally, outer walls may be provided to form a plurality of zones of contiguous storage areas in the warehouse system, wherein each zone may be closed from the exterior and other zones of contiguous storage areas, and wherein each of the plurality of zones may form a different temperature zone. In at least one of the outer walls, an opening may be provided to enable retrieval and placement of storage bins from and to the storage modules of the respective zone. At least a portion of the plurality of storage modules may be provided with a fire protection system.

In order to retrieve a storage bin from one of the plurality of stacks of the plurality of storage modules, at least one vehicle may, once the vehicle has retrieved the storage bin from the stack, be moved together with the storage bin along the top level of the respective storage module towards an edge of the storage module, where the vehicle may shift the storage bin beyond the edge of the storage module and lower the storage bin along the edge of the storage module to a handover point of the warehouse system.

According to a second aspect, a modular construction method for assembling a warehouse system is provided, wherein the warehouse system provides space for a three-dimensional arrangement of storage bins. The method comprises assembling the warehouse system from a plurality of prefabricated interconnectable storage modules, wherein each storage module comprises a storage area and a top level arranged above the storage area, wherein the storage area is adapted to accommodate a plurality of stacks of storage bins arranged in a horizontal two-dimensional grid at a bottom of the storage module, wherein, at the top level, at least one vehicle is movable in alignment with the two-dimensional grid to retrieve and place storage bins from and to the plurality of stacks. Assembling the warehouse system from the plurality of prefabricated interconnectable storage modules includes forming at least two levels of storage modules by placing one storage module above another in an individual room.

According to a third aspect, a prefabricated interconnectable storage module for use in assembling a warehouse system providing space for a three-dimensional arrangement of storage bins is provided. The warehouse system is to be assembled from a plurality of prefabricated interconnectable storage modules of the type of the prefabricated interconnectable storage module, the storage module comprising a storage area and a top level arranged above the storage area, wherein the storage area is adapted to accommodate a plurality of stacks of storage bins arranged in a horizontal two-dimensional grid at a bottom of the storage module, wherein the top level is adapted to allow at least one vehicle to be movable, at the top level, in alignment with the two-dimensional grid to retrieve and place storage bins from and to the plurality of stacks. The storage module is further adapted to be placeable above another storage module of the same type so that, when the warehouse system is assembled from the plurality of prefabricated interconnectable storage modules, at least two levels of storage modules are formable by placing one storage module above another in an individual room.

According to a fourth aspect, a vehicle for retrieving a storage bin from a warehouse system is provided. The warehouse system comprises at least one storage module having a storage area and a top level arranged above the storage area, the storage area being adapted to accommodate a plurality of stacks of storage bins, wherein the vehicle is configured to be movable at the top level of the storage module to retrieve storage bins from the plurality of stacks, wherein retrieving a storage bin from a respective stack includes raising the storage bin from the stack to the top level so that the storage bin is shiftable by the vehicle along the top level. The vehicle comprises a gripper configured to grip a storage bin to raise the storage bin from a respective stack and to shift the storage bin along the top level, wherein the gripper is arranged to extend beyond a main body of the vehicle so that, when the storage bin is raised to the top level, the storage bin is arranged alongside the main body on a first vertical side of the main body, and an alternating mechanism configured to change a position of the gripper with respect to the main body so that, when a storage bin is gripped and raised to the top level, the storage bin is arranged alongside the main body on a second vertical side of the main body.

The first vertical side of the main body and the second vertical side of the main body may be one of opposite vertical sides of the main body and adjacent vertical sides of the main body that extend orthogonally relative to each other.

In one variant, the gripper may be telescopically extendable beyond the first vertical side of the main body and telescopically extendable beyond the second vertical side of the main body, wherein the alternating mechanism may comprise a sliding mechanism configured to alternatingly slide the gripper between a telescopic extension beyond the first vertical side of the main body and a telescopic extension beyond the second vertical side of the main body. In another variant, the alternating mechanism may comprise a rotating mechanism configured to rotate the gripper between a rotational position in which the gripper extends beyond the first vertical side of the main body and a rotational position in which the gripper extends beyond the second vertical side of the main body.

In order to retrieve a storage bin from a respective stack, the vehicle may be configured, once the storage bin is raised and shifted along the top level towards an edge of the top level, to shift the storage bin beyond the edge of the storage module and to lower the storage bin along the edge of the storage module to a handover point of the warehouse system. Shifting the storage bin beyond the edge of the storage module may include rotating, using the rotating mechanism, the gripper while gripping the storage bin to a rotational position in which the gripper extends beyond the edge of the storage module.

### Brief Description of the Drawings

In the following, the aspects of the present disclosure will be described in more detail, also with reference to the accompanying drawings, in which:
- Figure 1: illustrates a perspective view of a warehouse system with a three-dimensional arrangement of storage bins according to the prior art;
- Figure 2: illustrates a perspective view of an interconnectable storage module of a warehouse system according to the present disclosure, providing space for a three-dimensional arrangement of storage bins;
- Figure 3: illustrates a perspective view of a warehouse system comprising a plurality of interconnected storage modules according to the present disclosure;
- Figure 4: provides an illustration of an exemplary step of a modular construction method in which two storage modules are placed one above the other according to the present disclosure;
- Figure 5: illustrates the storage module of Figure 2 in an empty state without storage bins, showing the grid structure of the storage module formed by a rod assembly;
- Figure 6: illustrates an interconnectable storage module with outer walls to form a zone providing a contiguous storage area that is closed from the exterior according to the present disclosure;
- Figure 7: illustrates a side view of the storage module of Figure 2 in a situation in which a storage bin is conveyed downwards along an outer edge of the storage module according to the present disclosure;
- Figure 8: illustrates a perspective view of a vehicle comprising a sliding mechanism to move the vehicle's gripper between two positions at opposite sides of a main body of the vehicle according to the present disclosure; and
- Figure 9: illustrates a perspective view of a vehicle comprising a rotating mechanism to move the vehicle's gripper between positions at various vertical sides of a main body of the vehicle according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

According to a first aspect of the present disclosure, there is provided a warehouse system providing space for a three-dimensional arrangement of storage bins, wherein the warehouse system comprises a plurality of interconnected storage modules. Each storage module comprises a storage area and a top level arranged above the storage area, wherein the storage area is adapted to accommodate a plurality of stacks of storage bins arranged in a horizontal two-dimensional grid at a bottom of the storage module, wherein, at the top level, at least one vehicle is movable in alignment with the two-dimensional grid to retrieve and place storage bins from and to the plurality of stacks. The plurality of interconnected storage modules comprises at least two levels of storage modules placed one above the other in an individual room.

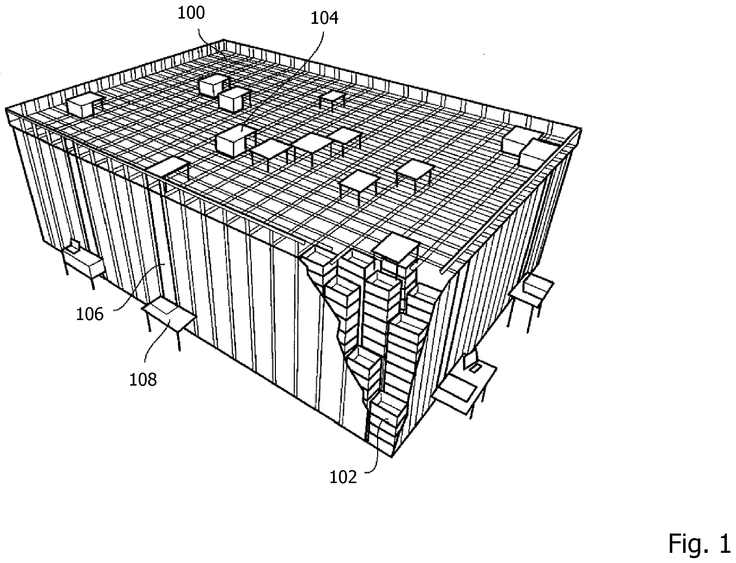

A storage module of the warehouse system, if considered on its own, may generally be designed in accordance with the grid structure described above with respect to Figure 1, i.e., it may comprise a grid structure of storage cells, wherein each storage cell may be adapted to accommodate a vertical stack of storage bins. At the bottom of the storage module, the storage cells may be arranged in accordance with a horizontal two-dimensional grid, thereby enabling - together with the vertical stacks of storage bins placeable in the storage cells - a three-dimensional (or "cube-like") arrangement of storage bins, in line with the illustration of Figure 1. In other words, each cell of the two-dimensional grid at the bottom of the storage module may form a base for a vertical stack of storage bins in the corresponding storage cell. Altogether, the storage cells (including their vertical extension accommodating the stacks) may form the storage area of the storage module.

Above the storage area, a top level of the storage module may be provided, at which at least one vehicle (or "robot") may be movable in alignment with the two-dimensional grid at the bottom of the storage module to retrieve and place storage bins from and to the plurality of stacks, e.g., by raising an uppermost storage bin from a stack to the top level ("retrieving a storage bin from a stack") or by lowering a storage bin from the top level down onto the stack ("placing a storage bin to the stack"). Placing a storage bin onto the stack may comprise placing the storage bin onto a topmost storage bin of the stack (if the stack is currently non-empty) or placing the storage bin onto a ground surface at the bottom of the storage module reserved for the stack (if the stack is currently empty), i.e., a cell of the two-dimensional grid at the bottom of the storage module forming the base for the stack. To this end, each vehicle may comprise a lifting mechanism enabling the vehicle to carry out corresponding raising/lowering procedures. Like in the illustration of Figure 1, the top level of the storage module may comprise a grid structure that allows the vehicles to move in alignment with the two-dimensional grid at the bottom of the storage module, so that a vehicle may be moved to a position above a stack in order to retrieve or place a storage bin from/to the stack accordingly. The grid structure at the top level may be formed of a two-dimensional grid of rails, for example, in which rollers of the vehicles may engage, in order for the vehicles to be movable horizontally in the longitudinal direction and/or in the transverse direction along the top level of the storage module.

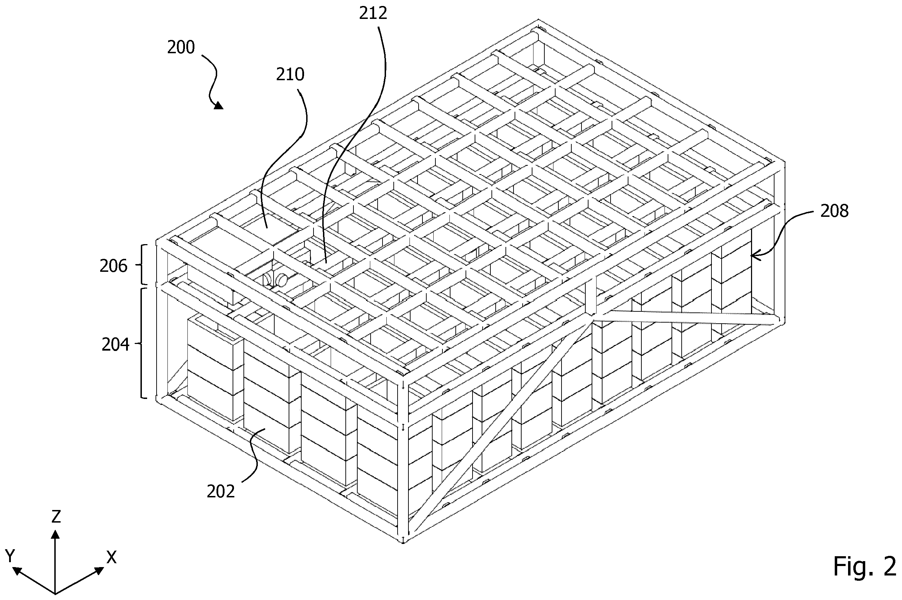

An exemplary illustration of an individual storage module according to the present disclosure is shown in Figure 2. As can be seen, the exemplary storage module 200 provides space for a three-dimensional arrangement of storage bins 202, wherein the storage module 200 comprises a storage area 204 and a top level 206 arranged above the storage area 204. In the storage area 204, vertical stacks 208 of storage bins 202 are arranged in a horizontal two-dimensional grid at the bottom of the storage module 200. In other words, the two-dimensional grid may extend in a longitudinal direction X and in a transverse direction Y at the bottom of the storage module 200, wherein, at each cell of the two-dimensional grid, a base for a stack 208 that may grow in the vertical direction Z may be formed. Each such space comprising the base for a stack 208 including the vertical space above the base for accommodating the bins 202 of the stack may be called a "storage cell", as referred to herein. At the top level 206, a vehicle 210 is shown which is movable (horizontally at the top level) in alignment with the two-dimensional grid above the respective stacks 208 to retrieve and place storage bins 202 from and to the plurality of stacks 208, as described above. A two-dimensional grid of rails 212, in which rollers of the vehicle 210 may engage, may form the bottom of the top level 206 which separates the top level 206 from the storage area 204.

As said, the general design of an individual storage module of the warehouse system (i.e., if considered on its own) may as such generally correspond to the design of the conventional grid structure known from WO 2014/075937 A1. However, contrary to the conventional design, the warehouse system according to the present disclosure may be made up of a plurality of such storage modules, wherein the plurality of storage modules may be interconnected (i.e., connected with each other using corresponding connection/fixation mechanisms) to form the overall warehouse system. In particular, according to the present disclosure, the plurality of interconnected storage modules may be arranged so that the warehouse system comprises at least two levels of storage modules placed one above the other in an individual room, such as the room of a building or a room of a container, for example. The warehouse system may as such comprise at least two storage modules placed one above the other in the vertical direction. Each such storage module may have identical dimensions (at least in the horizontal direction) and, preferably, have an identical overall construction. As such, when placed one above the other, the at least two storage modules may be in vertical alignment and together form a "stack" of interconnected storage modules.

Such construction of a warehouse system has at least two implications:
(1) On the one hand, the warehouse system has at least two "top levels" in the above sense, i.e., at least two levels at which vehicles are horizontally movable to retrieve and place storage bins from and to the stacks of the warehouse system. This is at least one "top level" more than in the warehouse system known from WO 2014/075937 A1, which - as shown Figure 1 - only has a single uppermost "top level". The warehouse system of the present disclosure, on the other hand, may be said to have, in addition, at least one "intermediate" top level disposed between the uppermost "top level" and the ground.
(2) On the other hand, as the "stacked" storage modules are - per definition of the present disclosure - placed in an individual (single) room, this also implies that the heights of the individual storage modules are generally lower than the height of the overall warehouse system, such as the one known from WO 2014/075937 A1, thereby generally yielding smaller stack sizes having less storage bins per stack.

Both implications, i.e., (1) more "top levels" allowing access to the storage bins via vehicles at different vertical levels and (2) smaller stacks having less storage bins per stack to be accessed by the vehicles, may generally allow quicker access times to retrieve and place storage bins from and to the stacks of the warehouse system, since needed relocation procedures of storage bins (e.g., from one stack to another, as described above) in order to make a bin to be retrieved accessible will be less time-consuming in average. Quicker overall response times and increased throughput may thus be achieved, which, depending on the particular design of the storage modules in the warehouse system (e.g., number of intermediate "top levels", maximum number of allowed storage bins per stack, etc.), may allow warehouse system providers to make promises to customers in the quick commerce industry for the retrieval of bins within a certain guaranteed amount of time, such as within few seconds, for example.

The above advantage may generally be said to be achieved by a separation of the warehouse system of WO 2014/075937 A1 (Figure 1) into smaller modules each having a "flatter" design, wherein the additional "top levels" of the storage modules and the smaller stack sizes resulting from the modular design may generally lead to the mentioned higher throughput capabilities. While, in certain embodiments, WO 2014/075937 A1 also discloses variants in which an overall warehouse may be formed by separate warehouse systems installed at different floors of a building, each such separate warehouse system is still formed in a separate room of the building (on a separate floor) and therefore suffers from the same disadvantage described above, namely that the stack sizes of such warehouse systems are too high to provide quick access times satisfying given access time requirements for all storage bins. According to the present disclosure, on the other hand, the plurality of "stacked" storage modules are provided in an individual room, dividing the room height into space for a plurality of "stacked" storage modules each having a comparably "flat" design, which enables the mentioned quicker access times.

Summarizing the above in still other words, rather than providing separate portions of a warehouse system at different rooms (or floors) of a building, the warehouse system of the present disclosure may be made up of a plurality of interconnected storage modules placed one above the other in the same room (i.e., disposed directly one above the other, without separation by a continuous floor of another entity, i.e., a floor not being formed by the storage modules of the warehouse system itself, such as the floor of a building), which implies smaller heights of the individual storage modules and, consequently, smaller stack sizes to be handled by the vehicles, thereby enabling higher throughput for the warehouse system as a whole. In some variants, for each of the plurality of storage modules, a height of the storage module may be dimensioned to allow a maximum number of 6, preferably 5, 4 or 3, storage bins per stack of the plurality of stacks of the storage module. Typical room heights in which the warehouse system of the present disclosure may be installed may comprise a maximum height of 5, preferably 4, 3 or 2.5 meters, for example. As said, the room may be a room of a building or a room of a container, i.e., a room that may be closable from the exterior. It will be understood that the formulation "in an individual room" as generally used herein to characterize the warehouse system according to the present disclosure may have the meaning of "on a floor" or "on an individual floor" (of a building or container), for example. It will also be understood that the present disclosure may comprise a building or container in which the warehouse system of the present disclosure is installed.

It will be understood that the advantages of increased throughput and quicker access times may be further improved, as more levels of storage modules placed one above the other are provided in the individual room. In such variants, the plurality of interconnected storage modules may not only form two levels of storage modules placed one above the other, but may comprise at least 3, preferably at least 4 or at least 5, levels of storage modules placed one above the other in the individual room. Each such number of levels may be applied for a given room height, e.g., for each of the exemplary maximum room heights mentioned above.

It will further be understood that, among the plurality of interconnected storage modules of the warehouse system, storage modules may not only be "stacked" in the vertical direction, i.e., placed one above the other, but may also be "lined up" in at least one horizontal direction, i.e., placed next to each other, e.g., in the longitudinal direction and/or in the transverse direction of the warehouse system. In other words, the plurality of interconnected storage modules may further comprise at least two storage modules placed one next to the other in a horizontal direction in the individual room. Each such storage module may have identical dimensions (at least in the vertical direction) and, preferably, have an identical overall construction. As such, when placed next to each other, the at least two storage modules may be in horizontal alignment (as seen in the longitudinal and/or the transverse direction, as applicable) and together form a "line" (or "row") of interconnected storage modules in the respective horizontal direction. As said, the "line-up" may be realized in either the longitudinal direction or in the transverse direction of the warehouse system, or both.

In specific variants, the warehouse system may comprise interconnected storage modules lined up in all three dimensions of the warehouse system, i.e., in the vertical direction, the longitudinal direction and the transverse direction. In such variants, the plurality of interconnected storage modules may comprise at least two storage modules placed one above the other in the vertical direction, at least two storage modules placed one next to the other in the longitudinal direction, and at least two storage modules placed one next to the other in the transverse direction in the individual room. In this case, the warehouse system may also be said to form a cube made up by the plurality of interconnected storage modules. As mentioned above for the number of vertical levels, the plurality of interconnected storage modules may likewise comprise at least 3, preferably at least 4 or at least 5, storage modules placed next to one another in the longitudinal direction and/or the transverse direction. It will be understood that, by placing storage modules next to each other in such manner, larger base areas of the warehouse system may be realized, wherein the shape of the base area may be varied dependent on how many storage modules are lined up in the longitudinal direction and how many storage modules are lined up in the transverse direction.

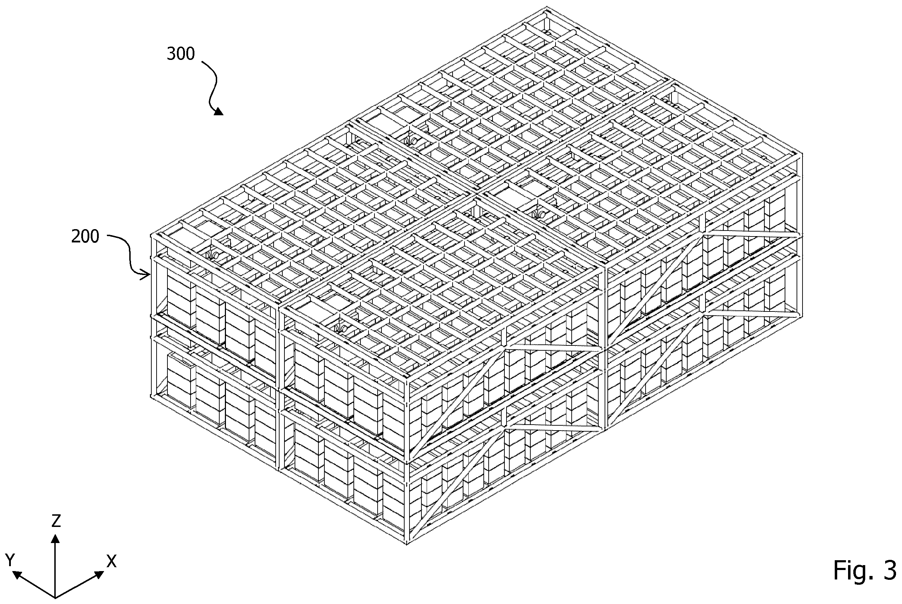

An exemplary illustration of a warehouse system comprising interconnected storage modules lined up in all three dimensions is shown in Figure 3. As can be seen, the exemplary warehouse system 300 comprises a plurality of interconnected storage modules, wherein, in the shown example, each of the storage modules has an identical construction, i.e., as described above with reference to the storage module 200 shown in Figure 2. In the shown example, the warehouse system 300 comprises two storage modules 200 placed one above the other in the vertical direction Z, two storage modules 200 placed one next to the other in the longitudinal direction X, and two storage modules 200 placed one next to the other in the transverse direction Y. It will be understood that such numbers of line-up storage modules in the vertical, longitudinal and transverse directions are merely exemplary and that other numbers of line-up may be provided in each direction, depending on the particular use case. In the shown example, each storage module 200 exemplarily provides a two-dimensional grid capable of accommodating 9 stacks in the longitudinal direction X and 4 stacks in the transverse direction Y, wherein each stack may comprise a maximum of 4 storage bins 202 in the vertical direction. As a result, each such storage module 200 may accommodate a maximum of 144 storage bins 202, and the overall warehouse system 300 may consequently accommodate a maximum of 1152 storage bins 202. Compared to the warehouse system of WO 2014/075937 A1, in which these 1152 storage bins 202 would be provided in the form of a "single storage module" having only one uppermost "top level" at which vehicles accessing the storage bins may move, according to the present disclosure, such design may be said to be subdivided into a plurality of smaller submodules, wherein the additional "top levels" of the submodules and the resulting smaller stack sizes may generally lead to the higher throughput capabilities, as described above.

At at least one (e.g., all) of the vertical levels of the warehouse system described herein, the "top levels" of the interconnected storage modules on the same vertical level may be interconnected such that vehicles are allowed to horizontally move from the top level of one storage module to the top level of an adjacent storage module (i.e., in the longitudinal and/or transverse direction). When the plurality of interconnected storage modules comprises at least two storage modules placed one next to the other, and when the top level of the at least two storage modules are formed of a two-dimensional grid of rails in which rollers of the vehicles may engage in order for the vehicles to be movable horizontally in the longitudinal direction and/or in the transverse direction along the top level, as described above, the rails of two adjacent interconnected storage modules may thus be arranged such that vehicles are allowed to move from the top level of one of the adjacent interconnected storage modules to the top level of the other one of the adjacent interconnected storage modules, to thereby allow continuous horizontal movement of the vehicles between adjacent interconnected storage modules.

Therefore, while, in the exemplary warehouse system 300 shown in Figure 3, individual vehicles 210 are exemplarily shown/provided for each separate storage module 200 (e.g., each such vehicle 210 may, in some variants, only be movable within the top level of its associated storage module 200, but not move over to an adjacent storage module 200), it will be understood that, in other variants, the warehouse system may be constructed such that one or more vehicles 210 may horizontally move between the "top levels" of adjacent storage modules 200. Thus, in the exemplary warehouse system 300, it may also be conceivable that one or more vehicles 210 are provided per vertical level of the warehouse system 300 and are horizontally movable to reach all stacks provided at that vertical level of the warehouse system 300.

As has become apparent from the above, the warehouse system according to the present disclosure may be made up of a plurality of interconnected storage modules. While it will be understood that each of the individual storage modules may be assembled at the time of constructing the warehouse system (i.e., the individual storage modules may be built up themselves during the installation procedure of the warehouse system - in other words, "as part of" the installation procedure of the warehouse system, but not before it), in some particular variants, the plurality of storage modules may be prefabricated and the warehouse system may be built based on (or "using") the prefabricated storage modules. In such variants, the warehouse system may thus be said to be assembled from the prefabricated storage modules. "Prefabricated" in this sense may mean that an individual storage module is already assembled (or "preconfigured") in itself and may be used as "one piece" (or "single item") for building up the warehouse system in the construction procedure of the warehouse system. The use of prefabricated interconnectable storage module may generally enable constructing the warehouse system in line with (or "following the principles of"/"using") modular construction methods, in which warehouse system may be built up by connecting together the respective "single items" (i.e., the prefabricated/preconfigured modules) iteratively to form the warehouse system, e.g., in a step-by-step manner. Each (or at least a portion of) of the plurality of storage modules may thus be a prefabricated interconnectable storage module, wherein the warehouse system may be assembled from the plurality of storage modules in the manner of a modular construction system, e.g., in line with a modular construction method, as mentioned above. In this way, warehouse construction may be realized in a highly efficient manner and on-site assembly times may be significantly reduced.

According to a second aspect of the present disclosure, there is thus also provided a modular construction method for assembling a warehouse system, wherein the warehouse system provides space for a three-dimensional arrangement of storage bins. The method comprises assembling the warehouse system from a plurality of prefabricated interconnectable storage modules, wherein each storage module comprises a storage area and a top level arranged above the storage area, wherein the storage area is adapted to accommodate a plurality of stacks of storage bins arranged in a horizontal two-dimensional grid at a bottom of the storage module, wherein, at the top level, at least one vehicle is movable in alignment with the two-dimensional grid to retrieve and place storage bins from and to the plurality of stacks. Assembling the warehouse system from the plurality of prefabricated interconnectable storage modules includes forming at least two levels of storage modules by placing one storage module above another in an individual room.

Likewise, according to a third aspect of the present disclosure, there is also provided a prefabricated interconnectable storage module for use in assembling a warehouse system providing space for a three-dimensional arrangement of storage bins, wherein the warehouse system is to be assembled from a plurality of prefabricated interconnectable storage modules of the type of the prefabricated interconnectable storage module. The storage module comprises a storage area and a top level arranged above the storage area, wherein the storage area is adapted to accommodate a plurality of stacks of storage bins arranged in a horizontal two-dimensional grid at a bottom of the storage module, wherein the top level is adapted to allow at least one vehicle to be movable, at the top level, in alignment with the two-dimensional grid to retrieve and place storage bins from and to the plurality of stacks. The storage module is further adapted to be placeable above another storage module of the same type so that, when the warehouse system is assembled from the plurality of prefabricated interconnectable storage modules, at least two levels of storage modules are formable by placing one storage module above another in an individual room.

It will be understood that, for the purpose of the modular construction method according to the second aspect as well as for the purpose of the prefabricated interconnectable storage module according to the third aspect, all features described herein with reference to the warehouse system according to the present disclosure (i.e., according to the first aspect) and its constructional characteristics - in particular including the placement of storage modules one above/next to the other and connecting them together - may be reflected/embodied in respective steps of the modular construction method according to the second aspect (e.g., as part of the assembling step mentioned above), and likewise be reflected/embodied in respective characteristics of the prefabricated interconnectable storage module according to the third aspect. The same applies vice versa with respect to characteristics described herein with reference to the modular construction method or the individual prefabricated interconnectable storage module, which likewise may be reflected/embodied in respective characteristics of the warehouse system according to the first aspect. Unnecessary repetitions are thus omitted in the following.

In order to support an efficient modular construction method, easy-to-apply connection mechanisms for connecting and fixing together adjacent storage modules (i.e., placed one above the other and/or placed next to the other) may be employed, which realize appropriate "interconnectability" of the storage modules. Interconnectability may generally be achieved by corresponding connection mechanisms (or "means"/"devices") provided at the storage modules to allow connecting (or "fixing together") the storage modules once they are placed next to and/or above each other. This may include applying a (e.g., preinstalled) locking mechanism (or "means7"device") at the adjacent modules once they are placed next to/above each other, for example. Optionally, the connection mechanisms may allow an (e.g., automatic or implicit) alignment of adjacent storage modules to be connected. To this end, corresponding guiding means (e.g., guiding bars, guiding pins, or the like) may be provided at the edges of the adjacent modules, for example. For storage modules to be placed one above the other in the vertical direction, a suitable connection mechanism may involve using a mechanical form fit that allows stacking the storage modules one above the other just like in a "bottle crate manner". In such a variant, among the plurality of interconnected storage modules, two storage modules placed one above the other may be interconnected using a mechanical form fit established between a bottom of the upper storage module and a top of the lower storage module of the two storage modules.

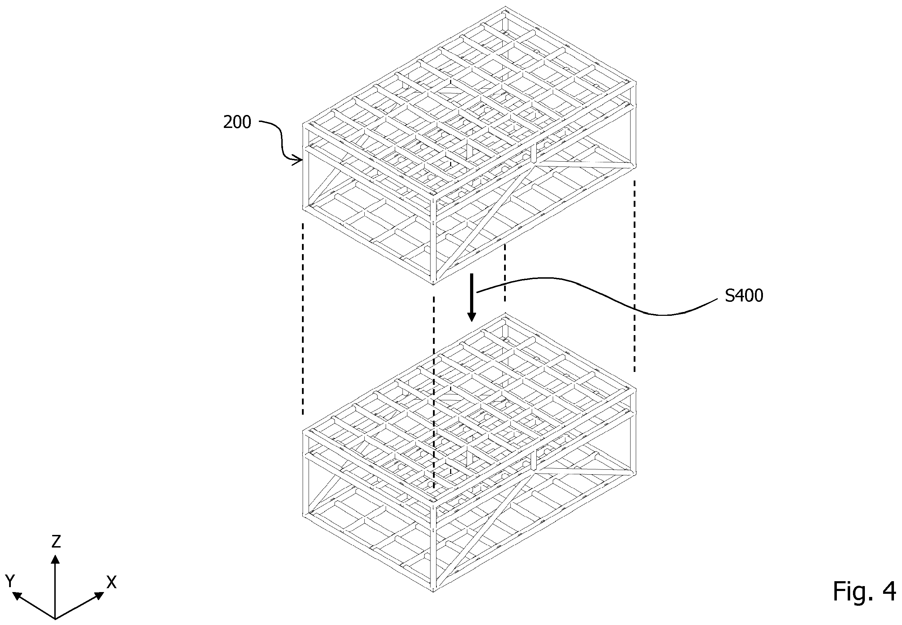

An exemplary illustration of a corresponding modular construction method is shown in Figure 4. As shown in the figure, the method comprises an exemplary assembling step S400 by which two prefabricated interconnectable storage modules are placed one above the other in order to form a warehouse system having at least two levels of storage modules, as generally described herein. As in the previous examples, each of the storage modules may have an identical construction, i.e., as described above with reference to the storage module 200 shown in Figure 2 (although, in Figure 4, the storage modules are shown in an empty state without storage bins at the time of construction). Placing the two prefabricated interconnectable storage modules 200 one above the other may include "stacking" them in a "bottle crate manner", as described above, and optionally connecting them using appropriate fixation means. It will be understood that similar steps may be performed in order to place two prefabricated interconnectable storage modules next to one another (e.g., in the longitudinal direction Z and/or in the transverse direction Y) to yield a warehouse system having at least two storage modules placed next to each other in at least one horizontal direction, as described herein and as exemplarily shown in Figure 3.

As said, the modular design of the warehouse system according to the present disclosure may be considered to be generally characterized by the fact that, as compared to conventional warehouse designs, a separation is made into smaller modules each having a comparably flat design, with smaller stack sizes having less storage bins per stack. A further advantage of such "smaller modules" may be that - given that storage modules are stacked above each other in an individual room, as generally required herein - their relative sizes compared to the individual room, such as the room of a building or a container, may be dimensioned such that the modules may be easily transportable, especially as "one prefabricated piece" (or "single item") through corresponding doors or windows of such building/container in order to be brought to the intended place of construction within the building/container accordingly. As such, each of the plurality of storage modules (especially if prefabricated) may be dimensioned to be transportable through a door and/or a window of a building/container in which the individual room is arranged.

As an example, in order to achieve such transportability, each of the plurality of storage modules may be dimensioned to have a maximum extension in a longitudinal direction of 4, preferably 3 or 2, meters. As another exemplary dimensional measure, it may be said that each of the plurality of storage modules may be dimensioned to accommodate a maximum of 500, preferably 400, 300, 200 or 100, storage bins in the plurality of stacks of the storage module. As typical dimensions of storage bins to be placed in a warehouse system, such as the one according to the present disclosure, may be in the ranges of length: 300mm-600mm, width: 200mm-400mm, and height: 145mm-310mm, a maximum of 500, preferably 400, 300, 200 or 100, storage bins accommodated in the stacks of an individual storage module implies a comparably "small dimension" of the storage modules (in particular compared to warehouse systems, such as the one known from WO 2014/075937 A1). Especially, a "flat design" of the storage modules may be implied when some of the above-mentioned dimensional parameters are combined, e.g., when the maximum extension of the storage modules in a longitudinal direction of 4, preferably 3 or 2, meters is combined with a maximum allowed number of 6, preferably 5, 4 or 3, storage bins per stack. Beyond the provision of quicker access times and increased throughput as well as a generally more flexible construction of the warehouse system, as described above, the modular constructibility using "smaller" and "flatter" modules may also allow fast on-site installation times. Especially in smaller setups (e.g., if the warehouse system is to be installed in comparably small rooms, rather than in huge industrial halls), this may enable a compact design of the warehouse system, while enabling to install the warehouse system just like in a "plug-and-play" manner with minimal effort. Typical dimensions for a storage module of this type, such as the one shown in Figure 2, may comprise a length of approx. 2.5 m in the longitudinal direction, approx. 1.5 m in the transverse direction, and approx. 1 m in the vertical direction, allowing - given bin dimensions of length: 300mm, width: 200mm, and height: 145mm - a maximum number of 4 bins per stack, with 9 stacks placeable next to each other in the longitudinal direction and 4 stacks placeable next to each other in the transverse direction, as shown in Figure 2.

With regard to the dimensional parameter values outlined in the above description (i.e., (1) the maximum allowed number of storage bins per stack being 6, preferably 5, 4 or 3, (2) the maximum room heights in which the warehouse system of the present disclosure may be installed being 5, preferably 4, 3 or 2.5 meters, (3) the number of levels of storage modules placed one above the other in the room of the building being at least 2, preferably at least 3, at least 4 or at least 5, (4) the number of storage modules placed next to one another in the room of the building in the longitudinal direction and/or in the transverse direction being at least 2, preferably at least 3, at least 4 or at least 5, (5) the maximum extension of a storage module in a longitudinal direction being 4, preferably 3 or 2, meters, (6) the maximum number of storage bins accommodated in the stacks of a storage module being 500, preferably 400, 300, 200 or 100, and (7) the length, width and height ranges of storage bins being length: 300mm-600mm, width: 200mm-400mm and height: 145mm-310mm), all possible combinations of these parameter values (although not explicitly listed herein) shall be considered to be explicitly disclosed in the present disclosure.

As far as the construction of an individual storage module is concerned, a storage module, especially the above-mentioned grid structure of each storage module, may be realized (e.g., exclusively) using a corresponding rod assembly, for example. A rod assembly may generally provide a lightweight implementation of a storage module and may therefore facilitate its transportability, especially in case of a prefabricated storage module. Furthermore, each (or at least a portion) of the plurality of storage modules may comprise an own ground surface based on which the plurality of stacks of storage bins of the storage module are placeable. In some variants, such ground surface may likewise be provided in the form of a rod assembly, e.g., a rod assembly that aligns with the two-dimensional grid at the bottom of the storage module, which may generally be more lightweight as compared to a ground surface made up by a continuous floor. Providing an own ground surface per storage module may especially be advantageous for lowest level storage modules of the warehouse system, because an own ground surface may make a storage module independent from the ground surface characteristics of the room in which the warehouse system is installed. The room of a building (e.g., a rented real estate), for example, may thus not have to be provided with smooth floor characteristics, because unevennesses of the floor may not affect the stackability of the storage bins on the base provided at the bottom of lowest level storage modules.

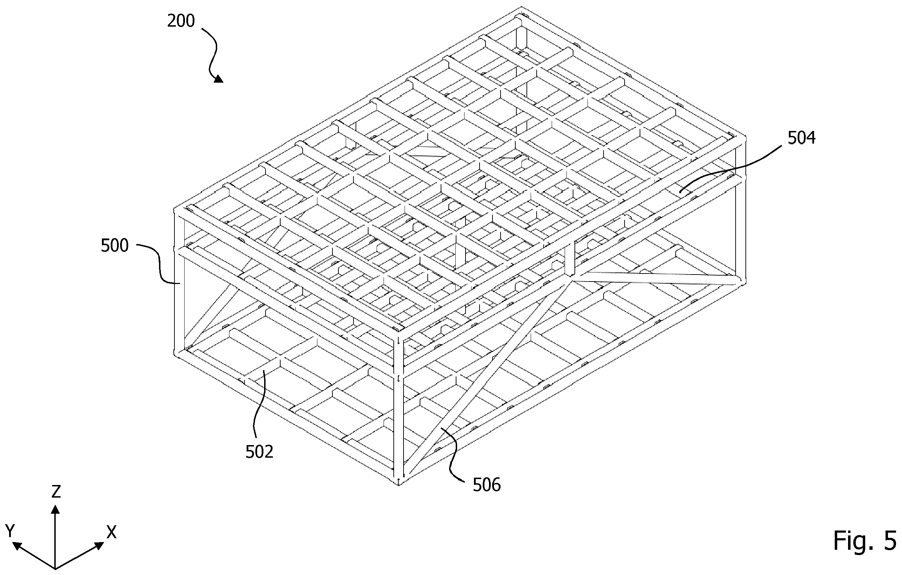

An exemplary rod assembly by which the grid structure of a storage module may be made up is shown in Figure 5. The exemplary storage module again has an identical construction as described above with reference to the storage module 200 shown in Figure 2 (although, in Figure 5, the storage module is shown in an empty state without storage bins). As can be seen from Figure 5, the rod assembly comprises outer rods 500 forming a cubic frame of the storage module 200 (comprising outer rods 500 in the vertical, longitudinal and transverse directions). The bottom of the storage module 200 is formed of a rod assembly forming a two-dimensional grid 502, wherein each cell of the two-dimensional grid 502 provides a base on which the storage bins (see reference numeral 202 in Figure 2) may be placed to form vertical stacks of storage bins. Above and in alignment with the two-dimensional grid 502, another two-dimensional grid 504 is provided, which separates the top level from the storage area of the storage module (see reference numerals 206 and 204 in Figure 2), which, as described with reference to Figure 2, may be provided in the form of a grid of rails 212 (see Figure 2), in which rollers of vehicles moving at the top level may engage. Figure 5 also shows that further rods may be provided in the rod assembly, such as struts 506 strengthening the cubic frame on one or more sides of the storage module, as appropriate.

As a further constructional characteristic of the warehouse system according to the present disclosure, at least a portion of the plurality of interconnected storage modules may be provided with outer walls so as to form a zone of contiguous storage areas that is closed from the exterior. In case of adjacent storage modules, such outer wall may be provided in the form of a partitioning wall provided at the adjoining surface between the adjacent storage modules. Zones may be provided in this manner to subdivide the warehouse system into different zones each fulfilling different storage conditions, such as different storage temperatures required for goods stored in the corresponding storage bins. Outer walls may also be provided to form a plurality of zones of contiguous storage areas in the warehouse system, wherein each zone may be closed from the exterior and other zones of contiguous storage areas. Each of the plurality of such zones may form a different temperature zone. As a mere example, different zones may be established to provide at least one of a temperature zone having room temperature, a temperature zone having cooled temperature, and a temperature zone having deep-freeze temperature (the latter possibly being relevant for the storage of products of the food industry, for example). Two or more of such different zones may be isolated differently (e.g., isolating each zone with different thickness of insulation material) and, also, each zone may be provided with a separate cooling system, for example.

The outer walls may be installed detachably, so that zones of contiguous storage areas may be changed as necessary over time. In particular, the outer walls may be installed in a manner that does not increase the outer dimensions of the storage modules, e.g., by installing the walls within a frame (optionally, including available struts in the frame, such as struts 506 shown in Figure 5) forming the outer side of the storage module. Furthermore, in at least one of the outer walls forming a zone, an (e.g., closable) opening may be provided to enable retrieval and storage of storage bins from and to the storage modules of the zone, e.g., so that vehicles at the "top level" of a corresponding storage module may deliver and receive storage bins through the opening to and from the exterior.

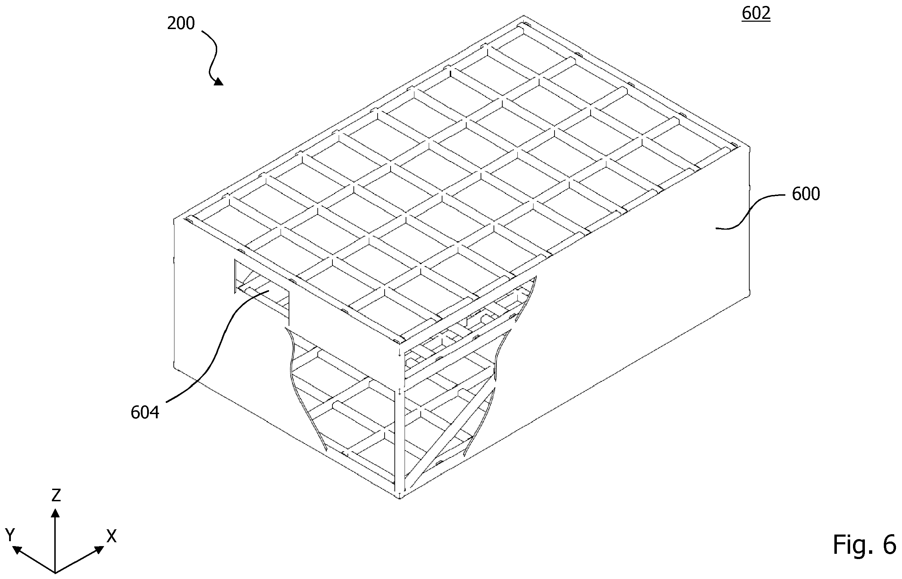

An exemplary illustration of a storage module having outer walls to form a zone in the above sense is shown in Figure 6. In the shown example, a special case is shown in which a zone is formed by a single storage module 200, i.e., outer walls 600 may be provided on each side of the single storage module 200 so as to form a contiguous storage area that is closed from the exterior 602. As shown, an exemplary opening 604 is provided in one outer wall 600 at the vertical level of the "top level" of the storage module 200 in order to allow a vehicle moving at the top level of the storage module to deliver and receive storage bins through the opening 604 to and from the exterior 602. It will be understood that the depicted configuration is merely exemplary and that zones of contiguous storage areas may be provided across several adjacent storage modules, as needed.

In further constructional variants, the characteristic of the modules having a "flat design" may also be exploited for other purposes, such as for fire prevention purposes regarding the warehouse system. While in conventional systems, such as those known from WO 2014/075937 A1, due to the comparably high stack sizes, it may generally not be possible to extinguish a fire breaking out at lower storage bins of a stack (e.g., at a lowermost bin of a stack), extinguishability for all bins of a stack - even including the lowermost bins of the stacks - may be achieved by the smaller stack sizes generally referred to herein, such as, when the allowed maximum number of storage bins per stack is 6, preferably 5, 4 or 3, as described above. Therefore, in order to provide improved fire protection capabilities, at least a portion (e.g., all) of the plurality of storage modules may be provided with a fire protection system. The fire protection system may be provided individually at each module or may be provided as a connected system covering multiple of the storage modules, for example.

In order to retrieve storage bins from the warehouse system of the present disclosure in general (i.e., no matter whether or not outer walls/openings are provided, as described above), rather than using bin lifts to convey storage bins in the vertical direction (as known from WO 2014/075937 A1), storage bins may be conveyed beyond outer edges of the storage modules when the storage bins are to be delivered in the vertical direction to a handover point (where warehouse personnel may take corresponding goods from the bins for further processing). In one such variant, in order to retrieve a storage bin from one of the plurality of stacks of the plurality of storage modules, at least one vehicle (moving at the top level of a respective storage module) may, once the vehicle has retrieved the storage bin from the stack, be moved together with (i.e., "carrying") the storage bin along the top level of the respective storage module towards an edge of the storage module, where the vehicle may shift the storage bin beyond the edge of the storage module and lower the storage bin along the edge of the storage module to a handover point of the warehouse system.

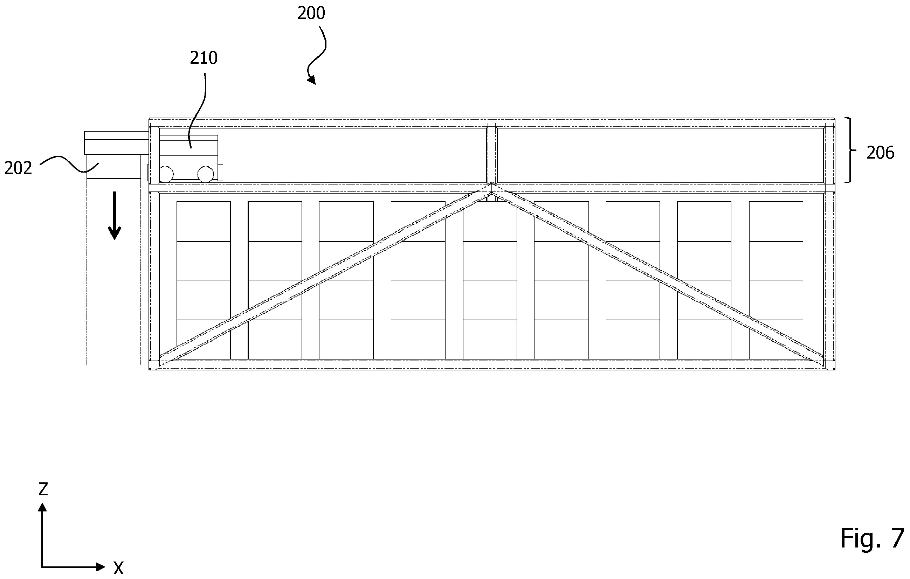

An exemplary illustration of such bin conveyance along the edge of the storage module is depicted in Figure 7, which shows a side view of the storage module 200 (viewing the longitudinal side of the storage module 200). In the figure, a state is shown in which the vehicle 210 has already carried the storage bin 202 along the top level 206 of the storage module 200 and currently holds the storage bin 202 at a position which horizontally extends beyond the outer edge of the storage module 200. As indicated by the downward arrow in the figure, as a next step, the vehicle 210 may lower the storage bin 202 along the edge of the storage module 200 in the vertical direction down to a handover point (not shown) of the warehouse system, for example.

Such a retrieval mechanism may be advantageous over that of the warehouse system known from WO 2014/075937 A1 which, as shown in Figure 1, uses a bin lift 106 that is integrated into the grid structure to convey a storage bin to a handover station 108. It will be understood that, as the bin lift 106 is integrated in (i.e., placed within) the grid structure, potential storage space within the grid structure may be wasted. According to the above-described retrieval mechanism, on the other hand, bins may not need to be transferred from the vehicles to any lift, but the vehicles themselves may be capable of conveying the bins down to a handover point, i.e., by shifting the storage bin beyond the edge of the storage module and lowering the storage bin along the edge of storage module to the handover point. In this way, a lift may no longer be needed at all. Depending on the orientation of the vehicle on the top level of the storage module, shifting the storage bin beyond the edge of the storage module may include rotating, using a rotating mechanism, a gripper of the vehicle gripping the storage bin to a rotational position in which the gripper extends beyond the edge of the storage module.

According to a fourth aspect of the present disclosure, there is also provided a vehicle for retrieving a storage bin from a warehouse system, wherein the warehouse system comprises at least one storage module having a storage area and a top level arranged above the storage area, wherein the storage area is adapted to accommodate a plurality of stacks of storage bins. The vehicle is configured to be movable at the top level of the storage module to retrieve storage bins from the plurality of stacks, wherein retrieving a storage bin from a respective stack includes raising the storage bin from the stack to the top level so that the storage bin is shiftable by the vehicle along the top level. The vehicle may as such correspond to a vehicle movable at the "top level" of a storage module, as generally described above, and, therefore, the warehouse system in which the vehicle is used may correspond to the warehouse system according to the present disclosure (i.e., according to the first aspect). Therefore, those features described above (in accordance with the first, second and third aspects of the present disclosure) in relation to vehicles movable along the "top levels" of the storage modules as well as the warehouse system in general may be comprised by the vehicle and accompanying warehouse system according to the fourth aspect as well, and vice versa. Unnecessary repetitions are thus omitted in the following.

In brief, the vehicle may also be described as a vehicle for retrieving a storage bin from a warehouse system, wherein the vehicle is configured to be movable at a top level of a storage module of the warehouse system and to retrieve a storage bin by (vertically) raising the storage bin to the top level from a stack of storage bins accommodated in a storage area of the storage module arranged below the top level, e.g., so that the storage bin is (horizontally) shiftable by the vehicle along the top level. As characteristic constructional features, the vehicle comprises a gripper configured to grip a storage bin to raise the storage bin from a respective stack (e.g., and to shift the storage bin along the top level), wherein the gripper is arranged to extend beyond a main body of the vehicle so that, when the storage bin is raised to the top level, the storage bin is arranged alongside the main body on a first vertical side of the main body. The vehicle further comprises an alternating mechanism configured to change a position of the gripper with respect to the main body so that, when a storage bin is gripped and raised to the top level, the storage bin is arranged alongside the main body on a second vertical side of the main body.

The vehicle may thus comprise a gripper which can be alternated, by the alternating mechanism (or "means"/"device"), between at least two positions, wherein, in a first position of the gripper, the gripper may be arranged with respect to the main body so that a gripped storage bin is arranged along the first vertical side of the main body, and wherein, in a second position of the gripper, the gripper may be arranged with respect to the main body so that a gripped storage bin is arranged along the second vertical side of the main body. The first vertical side of the main body and the second vertical side of the main body may be different from each other.

The gripper may be provided as part of a gripping arrangement disposed at a top of the main body of the vehicle, for example, wherein the gripping arrangement may comprise an arm which may extend into a horizontal direction beyond the top of the main body, and wherein the gripper may be disposed at (e.g., a distant end of) the arm so that a storage bin may be held (or "carried") along a vertical side of the main body of the vehicle (e.g., close to, but not in contact with the main body). For example, the gripping arrangement may be provided in a "tower crane"-like form having a tower arranged at (e.g., a top of) the main body and comprising a crane arm movable between at least two horizontal positions in order to alternate the position of the gripper between the first position of the gripper and second position of the gripper, as described above.

With respect to the two-dimensional grid of a storage module according to the present disclosure, the extension of the gripper in a horizontal direction beyond the main body may be such that, when the vehicle is placed (or "parked") on a given cell of the two-dimensional grid, the gripper is held above one of the adjacent cells of the two-dimensional grid so that the gripper can raise a storage bin to be retrieved from the stack of the adjacent cell. In order to be placed/parked on a given cell of the two-dimensional grid, as can exemplary be seen from the vehicle 210 shown in Figure 2, the main body of the vehicle may have horizontal dimensions (i.e., extensions in the longitudinal and transverse directions) that substantially correspond to (or "align with"/"fit onto") the given cell.

Which vertical side of the main body of the vehicle is meant by references to the "first vertical side" and the "second vertical side" of the main body, as generally referred to herein, may depend on the concrete implementation of the alternating mechanism and/or on the particular use case. For example, the first vertical side of the main body and the second vertical side of the main body may be one of opposite vertical sides of the main body and adjacent vertical sides of the main body that extend orthogonally relative to each other. With respect to the two-dimensional grid of a storage module, it may be said that, when the first vertical side and the second vertical side are opposite vertical sides of the main body and the vehicle remains parked/placed on a given cell of the two-dimensional grid, the first position of the gripper may be above one adjacent cell of the two-dimensional grid and the second position of the gripper may be above another cell of the two-dimensional grid which is on the opposite side of the main body of the vehicle (i.e., involving alternating the gripper by 180° on the horizontal plane from the viewpoint of the main body). Likewise, it may be said that, when the first vertical side and the second vertical side are adjacent vertical sides of the main body that extend orthogonally relative to each other and the vehicle remains parked/placed on a given cell of the two-dimensional grid, the first position of the gripper may be above one adjacent cell of the two-dimensional grid and the second position of the gripper may be above another cell of the two-dimensional grid which is on a side of the main body of the vehicle that extends orthogonally relative to the first side (i.e., involving alternating the gripper by 90° on the horizontal plane from the viewpoint of the main body).

In order to realize movability of the gripper between opposite vertical sides of the main body of the vehicle, in one variant, the gripper may be telescopically extendable beyond the first vertical side of the main body and telescopically extendable beyond the second vertical side of the main body. In this case, the alternating mechanism may comprise a sliding mechanism configured to alternatingly slide the gripper between a telescopic extension beyond the first vertical side of the main body (i.e., the first position of the gripper) and a telescopic extension beyond the second vertical side of the main body (i.e., the second position of the gripper).

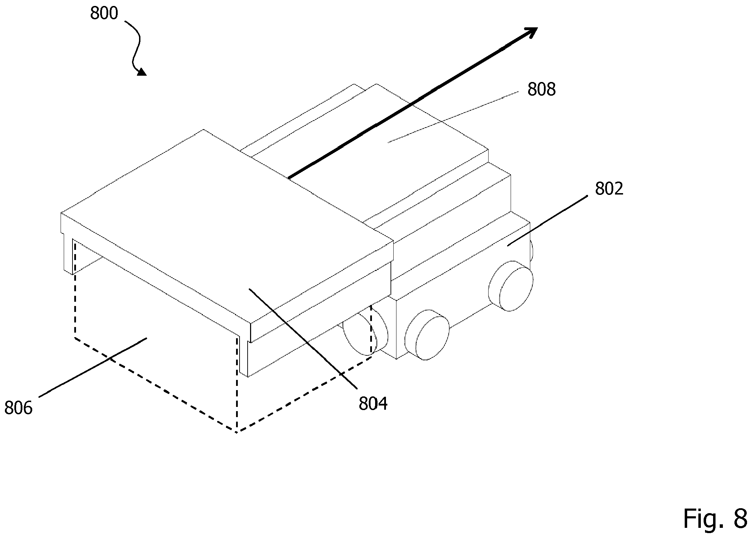

Such arrangement is exemplarily depicted in Figure 8, which shows a schematic illustration of a vehicle 800 in a perspective view. The vehicle 210 shown in Figure 2 may correspond to vehicle 800, for example. As can be seen, the exemplary vehicle 800 comprises a main body 802 as well as a gripper 804 in the form of an arm arranged at the top of the main body 802 and extending/extendable horizontally beyond the main body 802, so that the gripper 804 may grip a storage bin 806 (indicated by dashed lines only), wherein the storage bin 806 is arranged alongside the main body 802 on one vertical side of the main body 802. The vehicle 800 further comprises an alternating mechanism, which, in the shown example, is given by a sliding mechanism 808 that may be used (when the vehicle does not carry a storage bin) to slide the gripper 804 (using a translational movement) to the opposite side of the main body 802, as indicated by the arrow shown in Figure 8, i.e., in other words, to slide the gripper 804 from the telescopic extension beyond the vertical side of the main body 802 currently shown in Figure 8 to a telescopic extension beyond the opposite vertical side of the main body 802 (where the gripper 804 may again grip a storage bin 806, but now on the other side of the main body 802). It will be understood that the sliding mechanism 808 may in this sense be used to alternatingly slide the gripper 804 between these two telescopically extended positions.

On the other hand, in order to realize movability of the gripper between adjacent vertical sides of the main body extending orthogonally relative to each other (possibly also between opposite vertical sides of the main body of the vehicle), the alternating mechanism may comprise a rotating mechanism configured to rotate (or "turn") the gripper between a rotational position in which the gripper extends beyond the first vertical side of the main body (i.e., the first position of the gripper) and a rotational position in which the gripper extends beyond the second vertical side of the main body (i.e., the second position of the gripper). Such rotating mechanism may be implemented using a tower crane-like gripping arrangement, as mentioned above, for example.

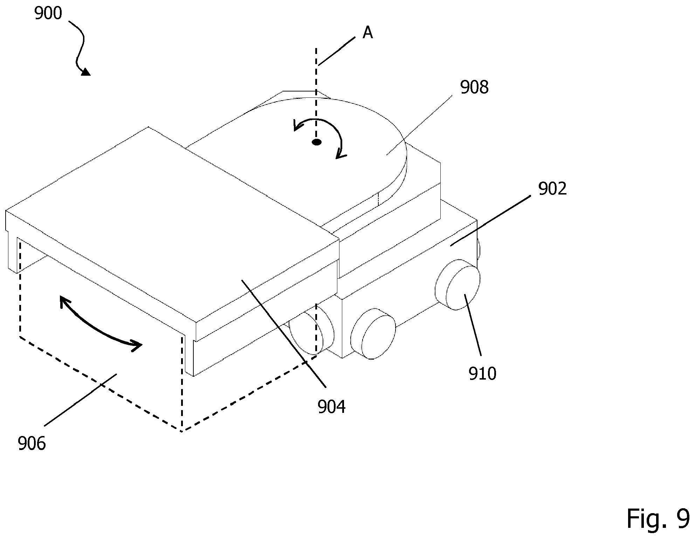

An exemplary arrangement for such rotating mechanism is depicted in Figure 9, which shows a schematic illustration of a vehicle 900 in a perspective view. The vehicle 900 generally corresponds (or "is identical") to the vehicle 800, the only difference being that, instead of a sliding mechanism 808, a rotating mechanism 908 is provided in order to alternate the gripper 904 between different positions (in this case, "rotational" positions). In the shown example, the rotating mechanism 908 is arranged such that the gripper 904 may be rotated about a vertical axis A extending through the center of the main body of the vehicle 900 (viewed from a top view of the vehicle). In Figure 9, the corresponding rotational movement is indicated by corresponding arrows, which show that such movement could be performed in one or both rotational directions. A rotational movement of the gripper 904 may include rotational movements of 90°, 180° and/or 270°, so that the gripper 904 may be alternated between positions alongside each vertical side of the main body 902 of the vehicle 900, as needed. It will be understood that, in such variant, changing the position of the gripper 904 may be possible while the vehicle 900 carries a storage bin 906 (again indicated by dashed lines only).

It will be understood that, due to the presence of the alternating mechanism, the vehicle of the present disclosure may be advantageous in that the gripper may be alternated between different positions, such as between opposite positions with respect to the main body of the vehicle. Vehicles known from WO 2014/075937 A1, on the other hand, do not comprise such alternating mechanism and can grip storage bins only at one dedicated (i.e., fixed) side, so that, at the "top level" of the warehouse system, at least two vehicles are necessary in order to reach and convey bins from all stacks of the warehouse system, i.e., one vehicle that is able to handle the "north-bound" conveyance direction and one that is able to handle the "south-bound" conveyance direction (i.e., the opposite conveyance direction) along the top level. Using the vehicle according to the present disclosure, on the other hand, no such two "north-bound" and "south-bound" vehicles are necessary per "top level", but, rather, a single vehicle capable of handling both conveyance directions may be sufficient per level. According to the present disclosure, less vehicles may thus be needed for the warehouse system at each "top level".

The views of Figures 8 and 9 also schematically show rollers on each vertical side of the main body of the respective vehicle, which may engage in corresponding rails of the "top level" of a storage modules in order to be horizontally movable in the longitudinal and/or transverse directions along the "top level", as described above. In the example of Figure 9, such rollers are indicated as rollers 910 that allow movement of the vehicle 900 in both the longitudinal and transverse directions. The vehicle 900 may comprise a displacement mechanism (or "means7"device") to this end, which may be used to alternatingly displace a corresponding set of rollers 910 so that, in one state, only rollers 910 to be used for movement in the longitudinal direction engage the rails of the "top level" while rollers 910 to be used for movement in the transverse direction do not engage any rails and, in another state, only rollers 910 to be used for movement in the transverse direction engage the rails of the "top level" while rollers 910 to be used for movement in the longitudinal direction do not engage any rails. In this way, the vehicle may alternatingly move in both the longitudinal and transverse directions of the two-dimensional grid along the "top level" of the respective storage module.

It will be understood that, when it is said herein that a vehicle may "move" along a top level of a storage module, it may also said that the vehicle is "driven" along the top level of the storage module. For driving purposes, the vehicle may comprise a driving device configured to drive the rollers of the vehicle to move the vehicle in at least one of the longitudinal direction and the transverse direction along the top level. The driving device may be controlled by a control system of the warehouse system (such as by a warehouse management computer, for example), e.g., through signals transmitted to the vehicle via wireless transmission. The driving device may be an electric motor, for example, but it will be understood that the driving device may also employ other drive technologies.

As already explained above, in order to retrieve storage bins from the warehouse system of the present disclosure, rather than using bin lifts to convey storage bins in the vertical direction, storage bins may be conveyed beyond outer edges of the storage modules when the storage bins are to be delivered in the vertical direction to a handover point (as exemplarily illustrated in Figure 7). To this end, i.e., in order to retrieve a storage bin from a respective stack, the vehicle may be configured, once the storage bin is raised and shifted along the top level towards an edge of the top level, to shift the storage bin beyond the edge of the storage module and to lower the storage bin along the edge of the storage module to a handover point of the warehouse system (corresponding control signals may also be sent from the control system to the vehicle, for example).

As already described above, in order to shift the storage bin beyond the edge of the storage module, it may be necessary, depending on the orientation of the vehicle on the top level of the storage module, to rotate the gripper of the vehicle to a rotational position in which the gripper extends beyond the edge of the storage module. From the viewpoint of the vehicle, shifting the storage bin beyond the edge of the storage module may thus include rotating, using the rotating mechanism, the gripper while gripping the storage bin to a rotational position in which the gripper extends beyond the edge of the storage module. The storage bin may then be lowered along the edge of the storage modules towards a handover point, as depicted in Figure 7. For the purpose of such lowering procedure - as well as, likewise, for lowering/raising procedures when a storage bin is to be placed onto/received from a stack of a storage module, the vehicle (e.g., the gripper of the vehicle) may comprise an (e.g., electrically driven) lifting mechanism (or "means7"device") which may be configured to lower/raise a gripped storage bin accordingly (e.g., in accordance with corresponding control signals received from the control system of the warehouse system).

It is noted that the above description of the vehicle of the fourth aspect generally refers to the variant of "retrieving a storage bin" from the warehouse system. It will be understood that corresponding measures may be realized for the other conveyance direction, i.e., the variant of "placing a storage bin" in the warehouse system. In this case, the corresponding measures may comprise reverse measures to the measures described above with respect to retrieving a storage bin.

Based on the above, the present disclosure provides a vehicle in accordance with the following embodiments:
Embodiment (A): A vehicle (210; 800; 900) for retrieving a storage bin (202) from a warehouse system (300), the warehouse system (300) comprising at least one storage module (200) having a storage area (204) and a top level (206) arranged above the storage area (204), the storage area (204) being adapted to accommodate a plurality of stacks (208) of storage bins (202), wherein the vehicle (210; 800; 900) is configured to be movable at the top level (206) of the storage module (200) to retrieve storage bins (202) from the plurality of stacks (208), wherein retrieving a storage bin (202) from a respective stack (208) includes raising the storage bin (202) from the stack (208) to the top level (206) so that the storage bin (202) is shiftable by the vehicle (210; 800; 900) along the top level (206), the vehicle (210; 800; 900) comprising:
   a gripper (804; 904) configured to grip a storage bin (202) to raise the storage bin (202) from a respective stack (208) and to shift the storage bin (202) along the top level (206), wherein the gripper (804; 904) is arranged to extend beyond a main body (802; 902) of the vehicle (210; 800; 900) so that, when the storage bin (202) is raised to the top level (206), the storage bin (202) is arranged alongside the main body (802; 902) on a first vertical side of the main body (802; 902); and
   an alternating mechanism (808; 908) configured to change a position of the gripper (804; 904) with respect to the main body (802; 902) so that, when a storage bin (202) is gripped and raised to the top level (206), the storage bin (202) is arranged alongside the main body (802; 902) on a second vertical side of the main body (802; 902).
Embodiment (B): The vehicle (210; 800; 900) of embodiment A, wherein the first vertical side of the main body (802; 902) and the second vertical side of the main body (802; 902) are one of:
   opposite vertical sides of the main body (802; 902), and
   adjacent vertical sides of the main body (802; 902) that extend orthogonally relative to each other.
Embodiment (C): The vehicle (210; 800) of embodiment A or B, wherein the gripper (804) is telescopically extendable beyond the first vertical side of the main body (802) and telescopically extendable beyond the second vertical side of the main body (802), wherein the alternating mechanism (808) comprises a sliding mechanism (808) configured to alternatingly slide the gripper (804) between a telescopic extension beyond the first vertical side of the main body (802) and a telescopic extension beyond the second vertical side of the main body (802).
Embodiment (D): The vehicle (900) of embodiment A or B, wherein the alternating mechanism (908) comprises a rotating mechanism (908) configured to rotate the gripper (904) between a rotational position in which the gripper (904) extends beyond the first vertical side of the main body (902) and a rotational position in which the gripper (904) extends beyond the second vertical side of the main body (902).
Embodiment (E): The vehicle (210; 800; 900) of any one of embodiments A to D, wherein, in order to retrieve a storage bin (202) from a respective stack (208), the vehicle (210; 800; 900) is configured, once the storage bin (202) is raised and shifted along the top level (206) towards an edge of the top level (206), to shift the storage bin (202) beyond the edge of the storage module (200) and to lower the storage bin (202) along the edge of the storage module (200) to a handover point of the warehouse system (300).
Embodiment (F): The vehicle (900) of embodiment E when dependent on embodiment D, wherein shifting the storage bin (202) beyond the edge of the storage module (200) includes rotating, using the rotating mechanism (908), the gripper (904) while gripping the storage bin (202) to a rotational position in which the gripper (904) extends beyond the edge of the storage module (200).

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A warehouse system (300) providing space for a three-dimensional arrangement of storage bins (202), wherein the warehouse system (300) comprises a plurality of interconnected storage modules (200), wherein each storage module (200) comprises a storage area (204) and a top level (206) arranged above the storage area (204), wherein the storage area (204) is adapted to accommodate a plurality of stacks (208) of storage bins arranged in a horizontal two-dimensional grid at a bottom of the storage module (200), wherein, at the top level (206), at least one vehicle (210; 800; 900) is movable in alignment with the two-dimensional grid to retrieve and place storage bins (202) from and to the plurality of stacks (208), wherein the plurality of interconnected storage modules (200) comprises at least two levels of storage modules (200) placed one above the other in an individual room.

2. The warehouse system (300) of claim 1, wherein, for each of the plurality of storage modules (200), a height of the storage module (200) is dimensioned to allow a maximum number of 6, preferably 5, 4 or 3, storage bins (202) per stack (208) of the plurality of stacks (208) of the storage module (200).

3. The warehouse system (300) of claim 1 or 2, wherein the plurality of storage modules (200) comprises at least 3, preferably at least 4 or at least 5, levels of storage modules (200) placed one above the other in the individual room.

4. The warehouse system (300) of any one of claims 1 to 3, wherein the plurality of interconnected storage modules (200) further comprises at least two storage modules (200) placed one next to the other in a horizontal direction in the individual room.

5. The warehouse system (300) of any one of claims 1 to 4, wherein each of the plurality of storage modules (200) is a prefabricated interconnectable storage module (200), wherein the warehouse system (300) is assembled from the plurality of storage modules (200) in the manner of a modular construction system.

6. The warehouse system (300) of any one of claims 1 to 5, wherein, among the plurality of interconnected storage modules (200), two storage modules (200) placed one above the other are interconnected using a mechanical form fit established between a bottom of the upper storage module (200) and a top of the lower storage module (200) of the two storage modules (200).

7. The warehouse system (300) of any one of claims 1 to 6, wherein each of the plurality of storage modules (200) is dimensioned to have a maximum extension in a longitudinal direction of 4, preferably 3 or 2, meters.

8. The warehouse system (300) of any one of claims 1 to 7, wherein each of the plurality of storage modules (200) is dimensioned to accommodate a maximum of 500, preferably 400, 300, 200 or 100, storage bins (202) in the plurality of stacks (208) of the storage module (200).

9. The warehouse system (300) of any one of claims 1 to 8, wherein each of the plurality of storage modules (200) comprises an own ground surface, optionally in the form of a rod assembly (502) aligning with the two-dimensional grid, based on which the plurality of stacks (208) of storage bins (202) of the storage module (200) are placeable.

10. The warehouse system (300) of any one of claims 1 to 9, wherein at least a portion of the plurality of interconnected storage modules (200) is provided with outer walls (600) so as to form a zone of contiguous storage areas (204) that is closed from the exterior (602), wherein, optionally:
outer walls (600) are provided to form a plurality of zones of contiguous storage areas (204) in the warehouse system (300), wherein each zone is closed from the exterior (602) and other zones of contiguous storage areas (204), wherein each of the plurality of zones forms a different temperature zone.

11. The warehouse system (300) of claim 10, wherein, in at least one of the outer walls (600), an opening (604) is provided to enable retrieval and placement of storage bins (202) from and to the storage modules (200) of the respective zone.

12. The warehouse system (300) of any one of claims 1 to 11, wherein at least a portion of the plurality of storage modules (200) is provided with a fire protection system.

13. The warehouse system (300) of any one of claims 1 to 12, wherein, in order to retrieve a storage bin (202) from one of the plurality of stacks (208) of the plurality of storage modules (200), at least one vehicle (210; 800; 900) is, once the vehicle (210; 800; 900) has retrieved the storage bin (202) from the stack (208), moved together with the storage bin (202) along the top level (206) of the respective storage module (200) towards an edge of the storage module (200), where the vehicle (210; 800; 900) shifts the storage bin (202) beyond the edge of the storage module (200) and lowers the storage bin (202) along the edge of the storage module (200) to a handover point of the warehouse system (300).

14. A modular construction method for assembling a warehouse system (300), the warehouse system (300) providing space for a three-dimensional arrangement of storage bins (202), the method comprising:
assembling (S400) the warehouse system (300) from a plurality of prefabricated interconnectable storage modules (200), wherein each storage module (200) comprises a storage area (204) and a top level (206) arranged above the storage area (204), wherein the storage area (204) is adapted to accommodate a plurality of stacks (208) of storage bins (202) arranged in a horizontal two-dimensional grid at a bottom of the storage module (200), wherein, at the top level (206), at least one vehicle (210; 800; 900) is movable in alignment with the two-dimensional grid to retrieve and place storage bins (202) from and to the plurality of stacks (208),
wherein assembling the warehouse system (300) from the plurality of prefabricated interconnectable storage modules (200) includes forming at least two levels of storage modules (200) by placing one storage module (200) above another in an individual room.

15. A prefabricated interconnectable storage module (200) for use in assembling a warehouse system (300) providing space for a three-dimensional arrangement of storage bins (202), wherein the warehouse system (300) is to be assembled from a plurality of prefabricated interconnectable storage modules (200) of the type of the prefabricated interconnectable storage module (200), the storage module (200) comprising a storage area (204) and a top level (206) arranged above the storage area (204), wherein the storage area (204) is adapted to accommodate a plurality of stacks (208) of storage bins (202) arranged in a horizontal two-dimensional grid at a bottom of the storage module (200), wherein the top level (206) is adapted to allow at least one vehicle (210; 800; 900) to be movable, at the top level (206), in alignment with the two-dimensional grid to retrieve and place storage bins (202) from and to the plurality of stacks (208), wherein the storage module (200) is further adapted to be placeable above another storage module (200) of the same type so that, when the warehouse system (300) is assembled from the plurality of prefabricated interconnectable storage modules (200), at least two levels of storage modules (200) are formable by placing one storage module (200) above another in an individual room.

## Amended claims

### Amended claims in accordance with Rule 137(2) EPC.

1. A warehouse system (300) providing space for a three-dimensional arrangement of storage bins (202) within an individual room of a building or a container, wherein the warehouse system (300) comprises a plurality of interconnected storage modules (200), wherein each storage module (200) comprises a storage area (204) and a top level (206) arranged above the storage area (204), wherein the storage area (204) is adapted to accommodate a plurality of stacks (208) of storage bins arranged in a horizontal two-dimensional grid at a bottom of the storage module (200), wherein, at the top level (206), at least one vehicle (210; 800; 900) is movable in alignment with the two-dimensional grid to retrieve and place storage bins (202) from and to the plurality of stacks (208),
**characterized in that** the plurality of interconnected storage modules (200) comprises at least two levels of storage modules (200) placed one above the other in the individual room of the building or the container without separation of a continuous floor of another entity, including the building and the container.

2. The warehouse system (300) of claim 1, wherein, for each of the plurality of storage modules (200), a height of the storage module (200) is dimensioned to allow a maximum number of 6, preferably 5, 4 or 3, storage bins (202) per stack (208) of the plurality of stacks (208) of the storage module (200).

3. The warehouse system (300) of claim 1 or 2, wherein the plurality of storage modules (200) comprises at least 3, preferably at least 4 or at least 5, levels of storage modules (200) placed one above the other in the individual room.

4. The warehouse system (300) of any one of claims 1 to 3, wherein the plurality of interconnected storage modules (200) further comprises at least two storage modules (200) placed one next to the other in a horizontal direction in the individual room.

5. The warehouse system (300) of any one of claims 1 to 4, wherein each of the plurality of storage modules (200) is a prefabricated interconnectable storage module (200), wherein the warehouse system (300) is assembled from the plurality of storage modules (200) in the manner of a modular construction system.

6. The warehouse system (300) of any one of claims 1 to 5, wherein, among the plurality of interconnected storage modules (200), two storage modules (200) placed one above the other are interconnected using a mechanical form fit established between a bottom of the upper storage module (200) and a top of the lower storage module (200) of the two storage modules (200).

7. The warehouse system (300) of any one of claims 1 to 6, wherein each of the plurality of storage modules (200) is dimensioned to have a maximum extension in a longitudinal direction of 4, preferably 3 or 2, meters.

8. The warehouse system (300) of any one of claims 1 to 7, wherein each of the plurality of storage modules (200) is dimensioned to accommodate a maximum of 500, preferably 400, 300, 200 or 100, storage bins (202) in the plurality of stacks (208) of the storage module (200).

9. The warehouse system (300) of any one of claims 1 to 8, wherein each of the plurality of storage modules (200) comprises an own ground surface, optionally in the form of a rod assembly (502) aligning with the two-dimensional grid, based on which the plurality of stacks (208) of storage bins (202) of the storage module (200) are placeable.

10. The warehouse system (300) of any one of claims 1 to 9, wherein at least a portion of the plurality of interconnected storage modules (200) is provided with outer walls (600) so as to form a zone of contiguous storage areas (204) that is closed from the exterior (602), wherein, optionally:
outer walls (600) are provided to form a plurality of zones of contiguous storage areas (204) in the warehouse system (300), wherein each zone is closed from the exterior (602) and other zones of contiguous storage areas (204), wherein each of the plurality of zones forms a different temperature zone.

11. The warehouse system (300) of claim 10, wherein, in at least one of the outer walls (600), an opening (604) is provided to enable retrieval and placement of storage bins (202) from and to the storage modules (200) of the respective zone.

12. The warehouse system (300) of any one of claims 1 to 11, wherein at least a portion of the plurality of storage modules (200) is provided with a fire protection system.

13. The warehouse system (300) of any one of claims 1 to 12, wherein, in order to retrieve a storage bin (202) from one of the plurality of stacks (208) of the plurality of storage modules (200), at least one vehicle (210; 800; 900) is, once the vehicle (210; 800; 900) has retrieved the storage bin (202) from the stack (208), moved together with the storage bin (202) along the top level (206) of the respective storage module (200) towards an edge of the storage module (200), where the vehicle (210; 800; 900) shifts the storage bin (202) beyond the edge of the storage module (200) and lowers the storage bin (202) along the edge of the storage module (200) to a handover point of the warehouse system (300).

14. A modular construction method for assembling a warehouse system (300), the warehouse system (300) providing space for a three-dimensional arrangement of storage bins (202) within an individual room of a building or a container, the method comprising:
assembling (S400) the warehouse system (300) from a plurality of prefabricated interconnectable storage modules (200), wherein each storage module (200) comprises a storage area (204) and a top level (206) arranged above the storage area (204), wherein the storage area (204) is adapted to accommodate a plurality of stacks (208) of storage bins (202) arranged in a horizontal two-dimensional grid at a bottom of the storage module (200), wherein, at the top level (206), at least one vehicle (210; 800; 900) is movable in alignment with the two-dimensional grid to retrieve and place storage bins (202) from and to the plurality of stacks (208),
**characterized in that** assembling the warehouse system (300) from the plurality of prefabricated interconnectable storage modules (200) includes forming at least two levels of storage modules (200) by placing one storage module (200) above another in the individual room of the building or the container without separation of a continuous floor of another entity, including the building and the container.

15. A prefabricated interconnectable storage module (200) for use in assembling a warehouse system (300) providing space for a three-dimensional arrangement of storage bins (202) within an individual room of a building or a container, wherein the warehouse system (300) is to be assembled from a plurality of prefabricated interconnectable storage modules (200) of the type of the prefabricated interconnectable storage module (200), the storage module (200) comprising a storage area (204) and a top level (206) arranged above the storage area (204), wherein the storage area (204) is adapted to accommodate a plurality of stacks (208) of storage bins (202) arranged in a horizontal two-dimensional grid at a bottom of the storage module (200), wherein the top level (206) is adapted to allow at least one vehicle (210; 800; 900) to be movable, at the top level (206), in alignment with the two-dimensional grid to retrieve and place storage bins (202) from and to the plurality of stacks (208),
**characterized in that** the storage module (200) is further adapted to be placeable above another storage module (200) of the same type so that, when the warehouse system (300) is assembled from the plurality of prefabricated interconnectable storage modules (200), at least two levels of storage modules (200) are formable by placing one storage module (200) above another in the individual room of the building or the container without separation of a continuous floor of another entity, including the building and the container.
